(19) **Europäisches Patentamt / European Patent Office / Office européen des brevets**

(11) **EP 3 663 134 B1**

(12) # EUROPEAN PATENT SPECIFICATION

(45) Date of publication and mention of the grant of the patent:
**10.08.2022 Bulletin 2022/32**

(21) Application number: **18841283.7**

(22) Date of filing: **14.06.2018**

(51) International Patent Classification (IPC):
**B60Q 1/14** *(2006.01)*    **B60Q 1/08** *(2006.01)*

(52) Cooperative Patent Classification (CPC):
**B60Q 1/143; B60Q 1/085;** B60Q 2300/45

(86) International application number:
**PCT/JP2018/022768**

(87) International publication number:
**WO 2019/026437 (07.02.2019 Gazette 2019/06)**

(54) **VEHICULAR LIGHTING SYSTEM AND VEHICLE**

FAHRZEUGBELEUCHTUNGSSYSTEM UND FAHRZEUG

SYSTÈME D'ÉCLAIRAGE POUR VÉHICULE, ET VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.08.2017   JP 2017150691**
**03.08.2017   JP 2017150692**

(43) Date of publication of application:
**10.06.2020   Bulletin 2020/24**

(73) Proprietor: **Koito Manufacturing Co., Ltd.**
**Tokyo 108-8711 (JP)**

(72) Inventors:
• **KATO, Yasuyuki**
**Shizuoka-shi**
**Shizuoka 424-8764 (JP)**
• **MATSUMOTO, Akinori**
**Shizuoka-shi**
**Shizuoka 424-8764 (JP)**
• **KANAMORI, Akitaka**
**Shizuoka-shi**
**Shizuoka 424-8764 (JP)**
• **YAMAMOTO, Teruaki**
**Shizuoka-shi**
**Shizuoka 424-8764 (JP)**
• **FUSHIMI, Yoshiaki**
**Shizuoka-shi**
**Shizuoka 424-8764 (JP)**

(74) Representative: **Gill Jennings & Every LLP**
**The Broadgate Tower**
**20 Primrose Street**
**London EC2A 2ES (GB)**

(56) References cited:
EP-A1- 3 290 271          WO-A1-2016/199442
WO-A1-2017/073632    WO-A1-2017/073632
DE-A1-102015 001 912  DE-A1-102015 200 859
JP-A- 2006 252 264      JP-A- 2008 143 505
JP-A- 2009 286 199      JP-A- 2014 184 851
JP-A- 2015 076 352      US-A1- 2014 247 349

**EP 3 663 134 B1**

**Description**

TECHNICAL FIELD

The present invention relates to a vehicle lighting system. Particularly, the present invention relates to a vehicle lighting system provided in a vehicle capable of traveling in an automated driving mode and a manual driving mode. Further, the present disclosure also relates to a vehicle including the vehicle lighting system and capable of traveling in the automated driving mode and a manual driving mode.

BACKGROUND ART

Recently, researches on automated driving techniques of automobiles have been actively conducted in various countries, and each country considers legislation to allow a vehicle (hereinafter the "vehicle" refers to an automobile) to travel on public roads in an automated driving mode. In the automated driving mode, a vehicle system automatically controls the traveling of the vehicle. Specifically, in the automated driving mode, the vehicle system automatically performs at least one of steering control (control of a traveling direction of the vehicle), brake control and accelerator control (control of braking and acceleration and deceleration of the vehicle) based on various types of information obtained from a sensor such as a camera or a radar (for example, a laser radar or a millimeter wave radar). On the other hand, in a manual driving mode to be described below, a driver controls the traveling of the vehicle as is the case of related-art vehicles. Specifically, in the manual driving mode, the traveling of the vehicle is controlled according to the driver's operation (the steering operation, the brake operation, and the accelerator operation), and the vehicle system does not automatically perform the steering control, the brake control, and the accelerator control. Herein, the driving mode of the vehicle dose not refer to a concept which exists only in some vehicles but refers to a concept which exists in all vehicles including a related-art vehicle not having an automated driving function and is classified according to, for example, a vehicle control method or the like.

Accordingly, it is expected that in the future a vehicle traveling in the automated driving mode (hereinafter referred to as an "automated driving vehicle" as appropriate) and a vehicle traveling in the manual driving mode (hereinafter referred to as a "manual driving vehicle" as appropriate) coexist on a public road. A key point in the development of the automatic driving technologies is to dramatically improve the accuracy of surrounding environment information acquired from various sensors mounted on the vehicle.

JP-A-H9-277887discloses an automatic following travel system where a following vehicle automatically follows a preceding vehicle. In the automatic following travel system, the preceding vehicle and the following vehicle each includes a lighting system, and character information for preventing another vehicle from interrupting between the preceding vehicle and the following vehicle is displayed on the lighting system of the preceding vehicle, and character information indicating that the following vehicle automatically follows the preceding vehicle is displayed on the lighting system of the following vehicle.

DE 10 2015 200859 A1 discloses an exterior lighting device of a motor vehicle set up for autonomous driving and for manually controlled driving.

WO 2017/073632 A1 discloses an illumination device configured so as to display, outside a vehicle capable of traveling in an automatic driving mode, information indicating the driving mode of the vehicle.

EP 3 290 271 A1 discloses a lamp of an autonomous vehicle.

JP 2015 076352 A discloses a headlight unit integrated with a laser radar for detecting an object

US 2014/247349 A1 discloses an integrated lighting, camera and sensor unit for installation on a vehicle.

DE 10 2015 001912 A1 discloses a method for controlling a headlight system of a vehicle as well as a control unit and a device for carrying out the method.

SUMMARY OF INVENTION

Problems to be Solved by the Invention

In the meantime, in JP-A-H9-277887, no consideration has been given to changing the brightness of light emitted from a lighting unit provided in the vehicle according to the driving mode of the vehicle.

Further, in JP-A-H9-277887, no consideration has been given to changing the brightness of the light emitted from the lighting unit provided in the vehicle according to an information relating to an object (pedestrian or the like) present outside the vehicle acquired by using a laser radar (LiDAR or the like).

An object of the present invention is to provide a vehicle lighting system capable of optimizing the brightness of a light distribution pattern formed by a lighting unit in view of a driving mode of a vehicle.

Means for Solving the Problem

According to an aspect of the present invention, as set out in appended claim 1, there is provided a vehicle lighting system for use in a vehicle capable of traveling in an automated driving mode and a manual driving mode.

The vehicle lighting system includes:

a lighting unit configured to form a light distribution pattern by emitting light toward the outside of the vehicle; and an lighting control unit configured to change the brightness of the light distribution pattern according to a driving mode of the vehicle.

According to the above-described configuration, the brightness of the light distribution pattern (for example, the illuminance of an illumination area illuminated by the light distribution pattern) is changed according to the driving mode of the vehicle. Therefore, it is possible to provide the vehicle lighting system capable of optimizing the brightness of the light distribution pattern formed by the lighting unit in view of the driving mode.

Further, the lighting control unit

may set the brightness of the light distribution pattern as first brightness when the driving mode of the vehicle is a manual driving mode, and
may set the brightness of the light distribution pattern as second brightness which is lower than the first brightness when the driving mode of the vehicle is an advanced driving assistance mode or a fully automated driving mode.

In this way, the brightness of the light distribution pattern decreases when the driving mode of the vehicle is the automated driving mode. For example, when the vehicle is traveling in the manual driving mode, the brightness of the light distribution pattern needs to be set as such brightness that the driver can sufficiently see surrounding environment of the vehicle. When the vehicle is traveling in the advanced driving assistance mode or the fully automated driving mode, since a vehicle control unit (in-vehicle computer), which is on behalf of the driver, controls the traveling of the vehicle based on surrounding environment information of the vehicle acquired by a sensor such as a radar or a camera, power consumption by a battery mounted on the vehicle is severe. Further, the sensor can acquire the surrounding environment information of the vehicle with the brightness of the light distribution pattern lower than the brightness necessary for the driver to sufficiently see the surrounding environment of the vehicle. Therefore, when the driving mode of the vehicle is the advanced driving assistance mode or the fully automated driving mode, since the brightness of the light distribution pattern can be lowered, it becomes possible to suppress the power consumption of the battery mounted on the vehicle.

The vehicle lighting system may further includes:

a camera configured to detect the surrounding environment of the vehicle;
a laser radar configured to detect the surrounding environment of the vehicle;
a housing; and
a cover attached to the housing.

The lighting unit, the camera, and the laser radar may be disposed in a space formed by the housing and the cover. In such a configuration structure, it is assumed that after a part of the light emitted from the lighting unit is internally reflected by the cover, the part of the internally reflected light is incident on the light receiving unit of the laser radar. In this case, the light incident on the light receiving unit of the laser radar may adversely affect an output result (3D mapping data) of the laser radar. On the other hand, since the brightness of the light distribution pattern is set as the second brightness which is lower than the first brightness when the driving mode of the vehicle is the advanced driving assistance mode or the fully automated driving mode (that is, since the brightness of the light distribution pattern is low), it is possible to suitably prevent the light incident on the light receiving unit of the laser radar from adversely affecting the output result of the laser radar. Accordingly, it is possible to reduce the power consumption of the battery and improve the reliability of the laser radar.

According to the invention, the shape of the light distribution pattern is changed according to the driving mode of the vehicle. In this way, the vehicle lighting system which can optimize the brightness and shape of the light distribution pattern in view of the driving mode of the vehicle can be provided.

When the driving mode of the vehicle is the automated driving mode, the lighting control unit may be configured to control the lighting unit such that the illuminance of the illumination area illuminated by the light distribution pattern becomes uniform.

In this way, since the illuminance of the illumination area illuminated by the light distribution pattern becomes uniform, the surrounding environment of the vehicle can be successfully imaged by the camera.

According to another aspect of the present invention, as set out in appended claim 5, there is provided a vehicle which is capable of traveling in the automated driving mode and a manual driving mode and includes the vehicle lighting system.

It is possible to provide the vehicle capable of optimizing the brightness of the light distribution pattern which is formed by the lighting unit in view of the driving mode.

A vehicle lighting system according to an unclaimed example is provided in a vehicle capable of traveling in the automated driving mode, wherein the vehicle lighting system includes:

a laser radar configured to acquire detection data indicating surrounding environment of the vehicle;
a lighting unit configured to form a light distribution pattern by emitting light toward the outside of the vehicle;
a first surrounding environment information generation unit configured to specify an attribute of an object present outside the vehicle and a distance between the object and the vehicle; and
a lighting control unit configured to change the brightness of light emitted from the lighting unit and illuminating the object according to the attribute of the object and the distance between the object and the vehicle.

According to the above-described configuration, the attribute of the object and the distance between the object and the vehicle are specified based on the detection data acquired by the laser radar. Thereafter, the brightness (for example, illuminance of the illumination area of the object illuminated by the light distribution pattern, luminous intensity of the lighting unit in a direction toward the object, or the like) of the light illuminating the object is changed according to the attribute of the object and the distance between the object and the vehicle. In this way, the lighting system capable of optimizing the brightness of the light which illuminates the object based on information on the object present outside the vehicle can be provided.

Further, the vehicle lighting system may further includes:

a camera configured to acquire image data indicating the surrounding environment of the vehicle; and
a second surrounding environment information generation unit configured to generate surrounding environment information indicating the surrounding environment of the vehicle based on the image data.

According to the above-described configuration, since the brightness of the light illuminating the object can be optimized based on the information on the object present outside the vehicle, a light distribution pattern for a camera suitable for imaging the surrounding environment of the vehicle using the camera can be obtained. Therefore, it is possible to suitably suppress the occurrence of black-out or white-out (halation) in the image data acquired by the camera, and it is possible to dramatically improve the accuracy of the surrounding environment information generated based on the image data.

Further, the lighting control unit

may set the brightness of the light illuminating the object as first brightness when the object is a sign or a delineator, and may set the brightness of the light illuminating the object as second brightness which is higher than the first brightness when the object is a pedestrian.

According to the above-described configuration, the brightness of the light illuminating the object is set as the first brightness when the object is a sign or a delineator. On the other hand, the brightness of the light illuminating the object is set as the second brightness which is higher than the first brightness when the object is a pedestrian. In this way, the object with high reflectance (the sign, the delineator or the like) is illuminated by light with low brightness, while the object with low reflectance (the pedestrian or the like) is illuminated by light with high brightness. Therefore, for example, it is possible to suitably suppress the occurrence of black-out or white-out in the image data acquired by the camera, and it is possible to dramatically improve the detection accuracy of the object based on the image data. Further, it is possible to prevent glare light from being given to the driver by reflected light reflected by the object having high reflectance while the visibility of the driver (or an occupant) with respect to the object having low reflectance is improved.

Further, when the object is a pedestrian, the brightness of the light illuminating the head of the pedestrian may be lower than the brightness of the light illuminating the body other than the head of the pedestrian.

According to the above-described configuration, when the object is a pedestrian, since the brightness of the light illuminating the head of the pedestrian is lower than the brightness of the light illuminating the body other than the head of the pedestrian, glare light can be prevented from being given to the pedestrian.

Further, the lighting control unit may be configured to control the lighting unit such that as the distance between the object and the vehicle increases, the brightness of the light illuminating the object increases.

According to the above-described configuration, as the distance between the object and the vehicle increases, the brightness of the light illuminating the object increases. Therefore, for example, when the distance between the object and the vehicle is large, although the object is displayed small in the image data acquired by the camera (that is, the area occupied by the object in the image data is small), since the brightness of the light that illuminates the object is high, the black-out of the object can be prevented in the image data. In this way, it is possible to improve the detection accuracy of the object based on the image data. Further, it is possible to improve the degree of recognition of the driver (or the occupant) with respect to the object present at a position away from the vehicle.

The vehicle which is capable of traveling in the automated driving mode and includes the vehicle lighting system is provided.

It is possible to provide the vehicle capable of optimizing the brightness of the light which illuminates the object based on the information on the object present outside the vehicle.

BRIEF DESCRIPTION OF DRAWINGS

Fig. 1 is a schematic diagram showing a top view of a vehicle including a vehicle system.
Fig. 2 is a block diagram showing the vehicle system.
Fig. 3 is a flowchart showing an example of an operation flow of a left front lighting system.
Fig. 4 is a diagram showing an example of a light distribution pattern, (a) is a diagram showing an example of a light distribution pattern when a driving mode of the vehicle is a manual driving mode or a driving assistance mode, (b) is a diagram showing an example of a light distribution pattern when the driving mode of the vehicle is an advanced driving assistance mode or a fully automated driving mode.
Fig. 5 is a schematic diagram showing a top view of a vehicle including a vehicle system.
Fig. 6 is a block diagram showing the vehicle system.
Fig. 7 is a diagram showing a functional block of a control unit of a left front lighting system.
Fig. 8 is a flowchart showing an example of an operation flow of the left front lighting system.
Fig. 9 is a diagram showing a state of the vehicle that emits a light distribution pattern from a lighting unit of the left front lighting system toward an object present in front of the vehicle.
Fig. 10 is a diagram showing an example of the light distribution pattern projected on a virtual screen virtually installed in front of the vehicle.

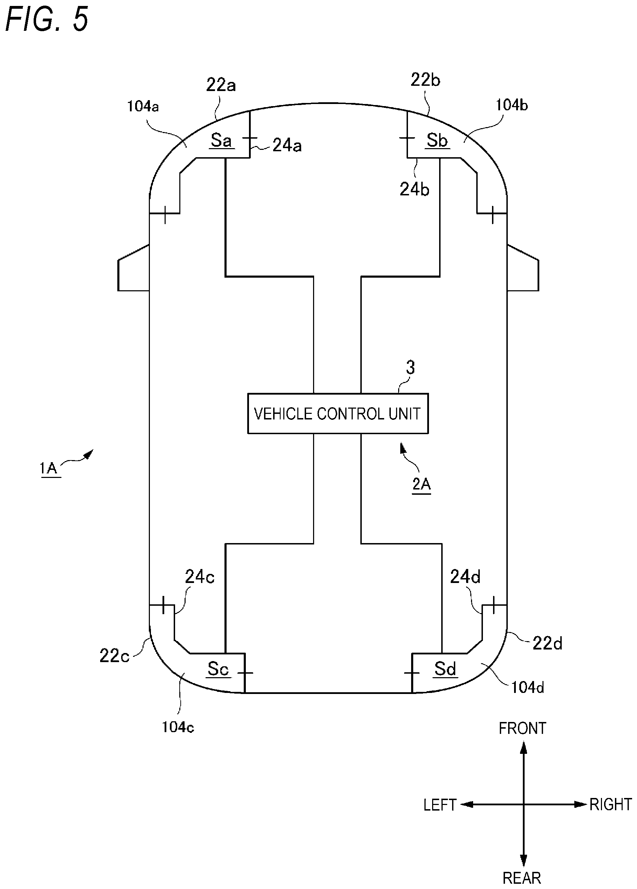

Fig. 5 to 10 show examples of a vehicle system which is not part of the present invention.

DESCRIPTION OF AN EMBODIMENT

Hereinafter , an embodiment of the present invention will be described with reference to the drawings. Dimensions of members shown in the drawings may be different from actual dimensions thereof for convenience of description.

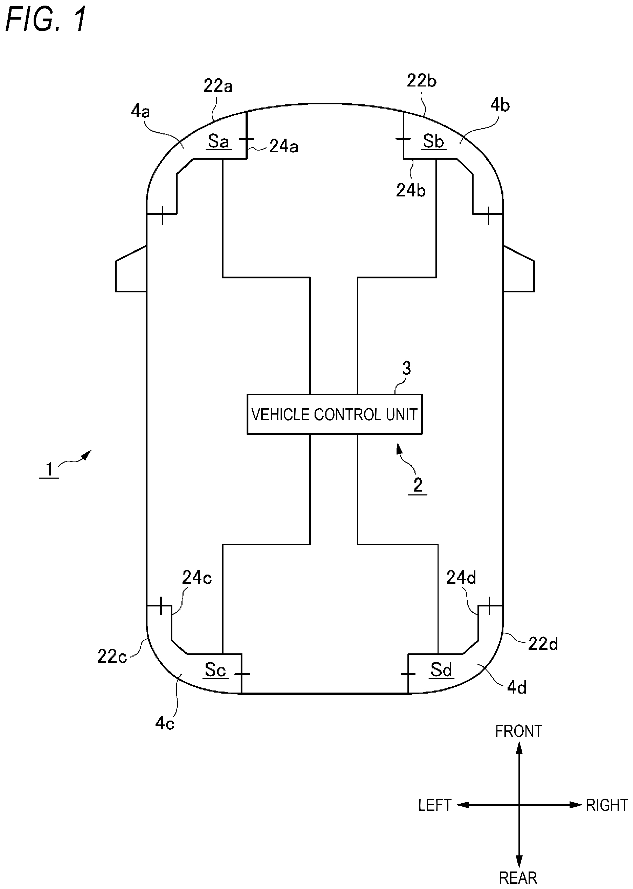

In the description of the present embodiment, a "left-right direction", a "front-rear direction" are appropriately referred to for convenience of description. These directions are relative directions set for a vehicle 1 shown in Fig. 1. The "front-rear direction" includes a "front direction" and a "rear direction". The "left-right direction" includes a "left direction" and a "right direction".

First, a vehicle 1 according to the present embodiment will be described with reference to Fig. 1. Fig. 1 is a schematic diagram showing a top view of the vehicle 1 including a vehicle system 2. As shown in Fig. 1, the vehicle 1 (automobile) is capable of traveling in an automated driving mode and includes the vehicle system 2. The vehicle system 2 includes at least a vehicle control unit 3, a left front lighting system 4a (hereinafter simply referred to as "lighting system 4a"), a right front lighting system 4b (hereinafter simply referred to as "lighting system 4b"), a left rear lighting system 4c (hereinafter simply referred to as "lighting system 4c"), and a right rear lighting system 4d (hereinafter simply referred to as "lighting system 4d").

The lighting system 4a is provided on a left front side of the vehicle 1. Particularly, the lighting system 4a includes a housing 24a which is installed on the left front side of the vehicle 1 and a light-transmitting cover 22a which is attached to the housing 24a. The lighting system 4b is provided on a right front side of the vehicle 1. Particularly, the lighting system 4b includes a housing 24a which is installed on the right front side of the vehicle 1 and a light-transmitting cover 22b which is attached to the housing 24b. The lighting system 4c is provided on a left rear side of the vehicle 1. Particularly, the lighting system 4c includes a housing 24c which is installed on the left rear side of the vehicle 1 and a light-transmitting cover 22c which is attached to the housing 24c. The lighting system 4d is provided on a right rear side of the vehicle 1. Particularly, the lighting system 4d includes a housing 24d which is installed on the right rear side of the vehicle 1 and a light-transmitting cover 22d which is attached to the housing 24d.

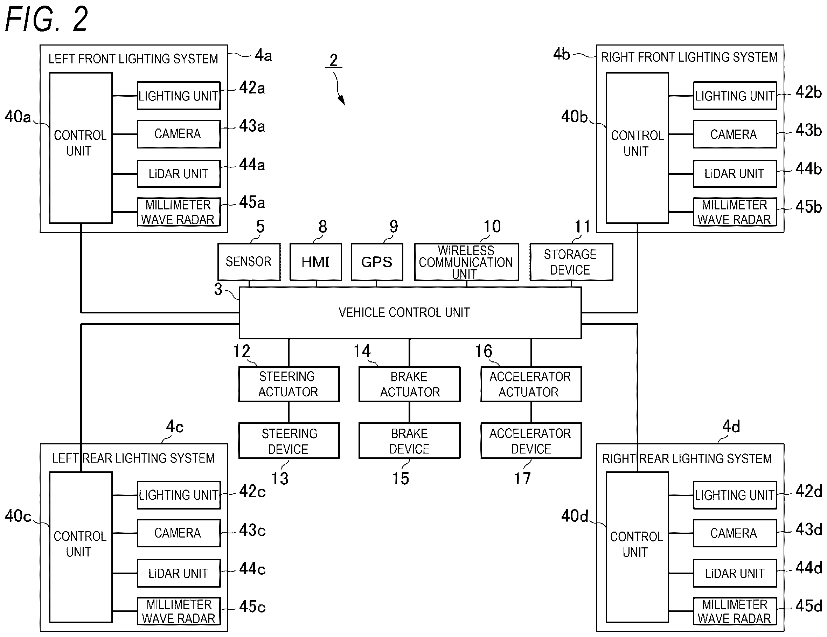

Next, the vehicle system 2 shown in Fig. 1 will be described in detail with reference to Fig. 2. Fig. 2 is a block diagram showing the vehicle system 2. As shown in Fig. 2, the vehicle system 2 includes the vehicle control unit 3, the lighting systems 4a to 4d, a sensor 5, a human machine interface (HMI) 8, a global positioning system (GPS) 9, a wireless communication unit 10, and a storage device 11. Further, the vehicle system 2 includes a steering actuator 12, a steering device 13, a brake actuator 14, a brake device 15, an accelerator actuator 16, and an accelerator device 17. Further, the vehicle system 2 includes a battery (not shown) configured to supply power.

The vehicle control unit 3 is configured to control traveling of the vehicle 1. The vehicle control unit 3 includes, for example, at least one electronic control unit (ECU). The electronic control unit includes at least one microcontroller which includes one or more processors and one or more memories, and another electronic circuit which includes an active element such as a transistor and a passive element. The processor is, for example, a central processing unit (CPU), a micro processing unit (MPU), a graphics processing unit (GPU), and/or a tensor processing unit (TPU). The CPU may include a plurality of CPU cores. The GPU may include a plurality of GPU cores. The memory includes a read only memory (ROM) and a random access memory (RAM). The ROM may store a vehicle control program. For example, the vehicle control program may include an artificial intelligence (AI) program for automated driving. The AI program is constructed by supervised or unsupervised machine learning, such as deep learning, using a neural network. The RAM may temporarily store the vehicle control program, vehicle control data, and/or surrounding environment information indicating surrounding environment of the vehicle. The processor may be configured to develop a program selected from the vehicle control program stored in the ROM onto the RAM, and execute various kinds of processing in cooperation with the RAM

The electronic control unit (ECU) may include at least one integrated circuit such as an application specific integrated circuit (ASIC) or a field-programmable gate array (FPGA). Further, the electronic control unit may include a combination of at least one microcontroller and at least one integrated circuit (the FPGA or the like).

The lighting system 4a further includes a control unit 40a, a lighting unit 42a, a camera 43a, a light detection and ranging (LiDAR) unit 44a (an example of a laser radar), and a millimeter wave radar 45a. As shown in Fig. 1, the control unit 40a, the lighting unit 42a, the camera 43a, the LiDAR unit 44a, and the millimeter wave radar 45a are disposed in a space Sa (light chamber) formed by the housing 24a and the light-transmitting cover 22a. The control unit 40a may be disposed at a predetermined location of the vehicle 1 other than the space Sa. For example, the control unit 40a may be configured integrally with the vehicle control unit 3.

The control unit 40a is configured to control operations of the lighting unit 42a, the camera 43a, the LiDAR unit 44a, and the millimeter wave radar 45a. Particularly, the control unit 40a functions as a lighting control unit configured to change the shape and brightness of the light distribution pattern formed by the lighting unit 42a according to the driving mode of the vehicle 1. Further, the control unit 40a may function as a camera control unit configured to, after acquiring image data acquired by the camera 43a, generate the surrounding environment information indicating the surrounding environment of the vehicle 1 based on the image data. Further, the control unit 40a may function as a LiDAR control unit configured to, after acquiring 3D mapping data (point cloud data) acquired from the LiDAR unit 44a, generate the surrounding environment information indicating the surrounding environment of the vehicle 1 based on the 3D mapping data. Further, the control unit 40a may function as a millimeter wave radar control unit configured to, after acquiring detection data acquired from the camera 45a, generate the surrounding environment information indicating the surrounding environment of the vehicle 1 based on the detection data.

Further, the control unit 40a includes, for example, at least one electronic control unit (ECU). The electronic control unit may include at least one microcontroller which includes one or more processors and one or more memories, and another electronic circuit (for example, a transistor or the like). The processor is, for example, a CPU, an MPU, a GPU, and/or a TPU. The CPU may include a plurality of CPU cores. The GPU may include a plurality of GPU cores. The memory includes a ROM and a RAM The ROM may store a surrounding environment specifying program for specifying the surrounding environment of the vehicle 1. For example, the surrounding environment specifying program is constructed by supervised or unsupervised machine learning, such as deep learning, using a neural network. The RAM may temporarily store the surrounding environment specifying program, the image data acquired by the camera 43a, the three-dimensional mapping data (point cloud data) acquired by the LiDAR unit 44a, and/or the detection data acquired by the millimeter wave radar 45a, or the like. The processor may be configured to develop a program selected from the surrounding environment specifying program stored in the ROM onto the RAM, and execute various kinds of processing in cooperation with the RAM The electronic control unit (ECU) may include at least one integrated circuit such as the ASIC or the FPGA. Further, the electronic control unit may include a combination of at least one microcontroller and at least one integrated circuit (the FPGA or the like).

The lighting unit 42a is configured to form the light distribution pattern by emitting light toward the outside (front) of the vehicle 1. The lighting unit 42a includes a light source emitting light and an optical system. For example, the light source may be formed by a plurality of light emitting elements arranged in a matrix shape (for example, N rows ' M columns, N > 1, M > 1). The light emitting element is, for example, a light emitting diode (LED), a laser diode (LD), or an organic EL element. The optical system may include at least one of a reflector configured to reflect the light emitted from the light source toward the front of the lighting unit 42a and a lens configured to refract light emitted directly from the light source or reflected by the reflector. When the driving mode of the vehicle 1 is the manual driving mode or the driving assistance mode, the lighting unit 42a is configured to form a light distribution pattern for a driver (for example, a low beam light distribution pattern or a high beam light distribution pattern) in front of the vehicle 1. In this way, the lighting unit 42a functions as a left headlamp unit. On the other hand, when the driving mode of the vehicle 1 is the advanced driving assistance mode or the fully automated driving mode, the lighting unit 42a may be configured to form a light distribution pattern for the camera in front of the vehicle 1.

The control unit 40a may be configured to individually supply an electric signal (for example, a pulse width modulation (PWM) signal) to each of the plurality of light emitting elements provided in the lighting unit 42a. In this way, the control unit 40a can individually select the light emitting elements to which the electric signal is supplied and can adjust a duty ratio of the electric signal for each light emitting element. That is, the control unit 40a can select a light emitting element to be turned on or off from the plurality of light emitting elements arranged in a matrix, and can determine the luminance of the light emitting element that is turned on. Therefore, the control unit 40a (lighting control unit) can change the shape and brightness of the light distribution pattern emitted forward from the lighting unit 42a.

The camera 43a is configured to detect the surrounding environment of the vehicle 1. Particularly, the camera 43a is configured to acquire image data indicating the surrounding environment of the vehicle 1 and transmit the image data to the control unit 40a. The control unit 40a specifies the surrounding environment information based on the transmitted image data. Here, the surrounding environment information may include, for example, information on an attribute of an object present outside the vehicle 1 and information on a position of the object with respect to the vehicle 1. The camera 43a includes, for example, an imaging element such as a CCD (charge-coupled device) or a CMOS (complementary MOS: metal oxide semiconductor). The camera 43a may be configured as a monocular camera or a stereo camera. When the camera 43a is the stereo camera, the control unit 40a can specify a distance between the vehicle 1 and the object present outside the vehicle 1 (for example, a pedestrian or the like) based on two or more pieces of image data acquired by the stereo camera by using parallax. In the present embodiment, one camera 43a is provided in the lighting system 4a, but two or more cameras 43a may be provided in the lighting system 4a.

The LiDAR unit 44a (an example of a laser radar) is configured to detect the surrounding environment of the vehicle 1. Particularly, the LiDAR unit 44a is configured to acquire the 3D mapping data (point group data) indicating the surrounding environment of the vehicle 1 and transmit the 3D mapping data to the vehicle control unit 40a. The control unit 40a specifies the surrounding environment information based on the transmitted 3D mapping data. Here, the surrounding environment information may include, for example, the information on the attribute of the object present outside the vehicle 1 and the information on the position of the object with respect to the vehicle 1.

More specifically, after acquiring information on time of flight (TOF) $\Delta T1$ of laser light (light pulse) at each emission angle (horizontal angle $\theta$, vertical angle $\varphi$) of the laser light, the LiDAR unit 44a can acquire information on a distance D between the LiDAR unit 44a (vehicle 1) at each emission angle (horizontal angle $\theta$, vertical angle $\varphi$) and the object present outside the vehicle 1 based on information on the time of flight $\Delta T1$. Here, the time of flight $\Delta T1$, for example, can be calculated as follows.

$$\text{Time of flight } \Delta T1 = \text{Time t1 when the laser light (light pulse) returns to the LiDAR}$$

$$\text{unit - Time t0 when the LiDAR unit emits the laser light (light pulse)}$$

In this way, the LiDAR unit 44a can acquire the 3D mapping data indicating the surrounding environment of the vehicle 1.

The LiDAR unit 44a includes, for example, a laser light source configured to emit the laser light, an optical deflector configured to perform scan with the laser light in a horizontal direction and a vertical direction, an optical system such as a lens, and a light receiving unit configured to receive the laser light reflected by the object. A central wavelength of the laser light emitted from the laser light source is not particularly limited. For example, the laser light may be invisible light having the central wavelength of around 900 nm. The optical deflector may be, for example, a micro electro mechanical systems (MEMS) mirror. The light receiving unit is, for example, a photodiode. The LiDAR unit 44a may acquire the 3D mapping data without performing scanning with the laser light with the optical deflector. For example, the LiDAR unit 44a may acquire the 3D mapping data by a phased array method or a flash method. In the present embodiment, one LiDAR unit 44a is provided in the lighting system 4a, but two or more LiDAR units 44a may be provided in the lighting system 4a. For example, when two LiDAR units 44a are provided in the lighting system 4a, one LiDAR unit 44a may be configured to detect the surrounding environment in a front area of the vehicle 1, and the other LiDAR unit 44a may be configured to detect the surrounding environment at a lateral side of the vehicle 1.

The millimeter wave radar 45a is configured to detect the surrounding environment of the vehicle 1. Particularly, the millimeter wave radar 45a is configured to acquire detection data indicating the surrounding environment of the vehicle 1 and transmit the detection data to the control unit 40a. The control unit 40a specifies the surrounding environment information based on the transmitted image data. Here, the surrounding environment information may include, for example, the information on the attribute of the object present outside the vehicle 1, the information on the position of the object with respect to the vehicle 1, and information on a speed of the object with respect to the vehicle 1.

For example, the millimeter wave radar 45a can acquire the distance D between the millimeter wave radar 45a (vehicle 1) and the object present outside the vehicle 1 by a pulse modulation method, a frequency moduleted-continuous wave (FM-CW) method, or a two-frequency CW method. When the pulse modulation method is used, after acquiring information on time of flight $\Delta T2$ of a millimeter wave at each emission angle of the millimeter wave, the millimeter wave radar 45a can acquire information on the distance D between the millimeter wave radar 45a (vehicle 1) at each emission angle and the object present outside the vehicle 1 based on information on the time of flight $\Delta T2$. Here, the time of flight $\Delta T2$, for example, can be calculated as follows.

$$\text{Time of flight } \Delta T2 = \text{Time t3 when the millimeter wave returns to the millimeter wave}$$

$$\text{radar - Time t2 when the millimeter wave radar emits the millimeter wave}$$

Further, the millimeter wave radar 45a can acquire information on a relative velocity V of the object present outside the vehicle 1 with respect to the millimeter wave radar 45a (vehicle 1) based on a frequency f0 of the millimeter wave emitted from the millimeter wave radar 45a and a frequency f1 of the millimeter wave returning to the millimeter wave radar 45a.

In the present embodiment, one millimeter wave radar 45a is provided in the lighting system 4a, but two or more millimeter wave radars 45a may be provided in the lighting system 4a. For example, the lighting system 4a may include a short-range millimeter wave radar 45a, a medium-range millimeter wave radar 45a, and a long-distance millimeter wave radar 45a.

The lighting system 4b further includes a control unit 40b, a lighting unit 42b, a camera 43b, a LiDAR unit 44b, and a millimeter wave radar 45b. As shown in Fig. 1, the control unit 40b, the lighting unit 42b, the camera 43b, the LiDAR unit 44b, and the millimeter wave radar 45b are disposed in a space Sb (light chamber) formed by the housing 24b and the light-transmitting cover 22b. The control unit 40b may be disposed at a predetermined location of the vehicle 1 other than the space Sb. For example, the control unit 40b may be configured integrally with the vehicle control unit 3. The control unit 40b may have a function and a configuration similar to those of the control unit 40a. The lighting unit 42b may have a function and a configuration similar to those of the lighting unit 42a. In this respect, the lighting unit 42a functions as the left headlamp unit, while the illumination unit 42b functions as a right headlamp unit. The camera 43b may have a function and a configuration similar to those of the camera 43a. The LiDAR unit 44b may have a function and a configuration similar to those of the LiDAR unit 44a. The millimeter wave radar 45b may have a function and a configuration similar to those of the millimeter wave radar 45a.

The lighting system 4c further includes a control unit 40c, a lighting unit 42c, a camera 43c, a LiDAR unit 44c, and a millimeter wave radar 45c. As shown in Fig. 1, the control unit 40c, the lighting unit 42c, the camera 43c, the LiDAR unit 44c, and the millimeter wave radar 45c are disposed in a space Sc (light chamber) formed by the housing 24c and the light-transmitting cover 22c. The control unit 40c may be disposed at a predetermined location of the vehicle 1 other than the space Sc. For example, the control unit 40c may be configured integrally with the vehicle control unit 3. The control unit 40c may have a function and a configuration similar to those of the control unit 40a.

The lighting unit 42c is configured to form a light distribution pattern by emitting light toward the outside (rear) of the vehicle 1. The lighting unit 42c includes a light source emitting light and an optical system. For example, the light source may be formed by a plurality of light emitting elements arranged in a matrix shape (for example, N rows ' M columns, N > 1, M > 1). The light emitting element is, for example, the LED, the LD, or an the organic EL element. The optical system may include at least one of a reflector configured to reflect the light emitted from the light source toward the front of the lighting unit 42c and a lens configured to refract light emitted directly from the light source or reflected by the reflector. When the driving mode of the vehicle 1 is the manual driving mode or the driving assistance mode, the lighting unit 42a may be turned off. On the other hand, when the driving mode of the vehicle 1 is the advanced driving assistance mode or the fully automated driving mode, the lighting unit 42c may be configured to form a light distribution pattern for the camera at a rear side of the vehicle 1.

The camera 43c may have a function and a configuration similar to those of the camera 43a. The LiDAR unit 44c may have a function and a configuration similar to those of the LiDAR unit 44c. The millimeter wave radar 45c may have a function and a configuration similar to those of the millimeter wave radar 45a.

The lighting system 4d further includes a control unit 40d, a lighting unit 42d, a camera 43d, a LiDAR unit 44d, and a millimeter wave radar 45d. As shown in Fig. 1, the control unit 40d, the lighting unit 42d, the camera 43d, the LiDAR unit 44d, and the millimeter wave radar 45d are disposed in a space Sd (light chamber) formed by the housing 24d and the light-transmitting cover 22d. The control unit 40d may be disposed at a predetermined location of the vehicle 1 other than the space Sd. For example, the control unit 40d may be configured integrally with the vehicle control unit 3. The control unit 40d may have a function and a configuration similar to those of the control unit 40c. The lighting unit 42d may have a function and a configuration similar to those of the lighting unit 42c. The camera 43d may have a function and a configuration similar to those of the camera 43c. The LiDAR unit 44d may have a function and a configuration similar to those of the LiDAR unit 44c. The millimeter wave radar 45d may have a function and a configuration similar to those of the millimeter wave radar 45c.

The sensor 5 may include an acceleration sensor, a speed sensor, a gyro sensor, or the like. The sensor 5 is configured to detect a traveling state of the vehicle 1 and output traveling state information indicating the traveling state of the vehicle 1 to the vehicle control unit 3. The sensor 5 may further include a seating sensor which detects whether a driver is sitting on a driver seat, a face direction sensor which detects a direction of the face of the driver, an outside weather sensor which detects an outside weather condition, and a human-presence sensor which detects whether there is a person in the vehicle.

The HMI (human machine interface) 8 includes an input unit which receives input operation from a driver and an output unit which outputs the traveling state information or the like to the driver. The input unit includes a steering wheel, an accelerator pedal, a brake pedal, a driving mode switch which switches a driving mode of the vehicle 1, or the like. The output unit includes a display configured to display the traveling state information, the surrounding environment information, and a lighting state of the lighting system 4.

The GPS (global positioning system) 9 is configured to acquire current position information of the vehicle 1 and output the acquired current position information to the vehicle control unit 3. The wireless communication unit 10 is configured to receive information on another vehicle around the vehicle 1 (for example, traveling information of the other vehicle or the like) from the other vehicle and transmit the information on the vehicle 1 (for example, the traveling information or the like) to the other vehicle (vehicle-to-vehicle communication).

The wireless communication unit 10 is configured to receive infrastructure information from infrastructure equipment such as a traffic light and an indicator light, and transmit the traveling information of the vehicle 1 to the infrastructure equipment (road-to-vehicle communication). The wireless communication unit 10 is configured to receive information on a pedestrian from a portable electronic device (a smartphone, a tablet, a wearable device, or the like) carried by the pedestrian and transmit own vehicle travel information of the vehicle 1 to the portable electronic device (pedestrian-to-vehicle communication). The vehicle 1 may directly communicate with the other vehicle, the infrastructure equipment, or the portable electronic device in an ad hoc mode, or may communicate via an access point. The wireless communication standard is, for example, Wi-Fi (registered trademark), Bluetooth (registered trademark), ZigBee (registered trademark), or LPWA. Further, the vehicle 1 may communicate with the other vehicle, the infrastructure equipment, or the portable electronic device via a mobile communication network.

The storage device 11 is an external storage device such as a hard disk drive (HDD) or a solid state drive (SSD). The storage device 11 may store 2D or 3D map information and/or the vehicle control program. The storage device 11 is configured to output the map information or the vehicle control program to the vehicle control unit 3 in response to a request from the vehicle control unit 3. The map information and the vehicle control program may be updated via the wireless communication unit 10 and the communication network such as the Internet.

When the vehicle 1 travels in the automated driving mode, the vehicle control unit 3 automatically generates at least one of a steering control signal, an accelerator control signal, and a brake control signal based on the traveling state information, the surrounding environment information, the current position information and/or the map information, or the like. The steering actuator 12 is configured to receive the steering control signal from the vehicle control unit 3 and control the steering device 13 based on the received steering control signal. The brake actuator 14 is configured to receive the brake control signal from the vehicle control unit 3 and to control the brake device 15 based on the received brake control signal. The accelerator actuator 16 is configured to receive an accelerator control signal from the vehicle control unit 3 and control the accelerator device 17 based on the received accelerator control signal. In this way, in the automated driving mode, the traveling of the vehicle 1 is automatically controlled by the vehicle system 2.

On the other hand, when the vehicle 1 travels in the manual driving mode, the vehicle control unit 3 generates a steering control signal, an accelerator control signal, and a brake control signal according to a manual operation of the driver to the accelerator pedal, the brake pedal, and the steering wheel. Accordingly, in the manual driving mode, since the steering control signal, the accelerator control signal, and the brake control signal are generated by the manual operation of the driver, the traveling of the vehicle 1 is controlled by the driver.

Next, the driving mode of the vehicle 1 will be described. The driving mode includes the automated driving mode and the manual driving mode. The automated driving mode includes the fully automated driving mode, the advanced driving assistance mode, the driving assistance mode. In the fully automated driving mode, the vehicle system 2 automatically performs all traveling controls including a steering control, a brake control, and the driver does not drive the vehicle 1 while the driver is capable of driving the vehicle 1. In the advanced driving assistance mode, the vehicle system 2 automatically performs all the traveling controls including the steering control, the brake control, and the accelerator control, and the driver does not drive the vehicle 1 while the driver is capable of driving the vehicle 1. In the driving assistance mode, the vehicle system 2 automatically performs a part of the traveling controls including the steering control, the brake control, and the accelerator control, and the driver drives the vehicle 1 under the driving assistance of the vehicle system 2. On the other hand, in the manual driving mode, the vehicle system 2 does not automatically perform the traveling control, and the driver drives the vehicle 1 without the driving assistance of the vehicle system 2.

The driving mode of the vehicle 1 may be switched by operating the driving mode switch. In this case, the vehicle control unit 3 switches the driving mode of the vehicle 1 among the four driving modes (the fully automated driving mode, the advanced driving assistance mode, the driving assistance mode, and the manual driving mode) according to the operation of the driver to the driving mode switch. Further, the driving mode of the vehicle 1 may be automatically switched based on information on a traveling permitted section where the traveling of the automated driving vehicle is permitted and a traveling prohibited section where the traveling of the automated driving vehicle is prohibited or information on the external weather condition. In this case, the vehicle control unit 3 switches the driving mode of the vehicle 1 based on these pieces of information. Further, the driving mode of the vehicle 1 may be automatically switched by using the seating sensor, the face direction sensor, or the like. In this case, the vehicle control unit 3 may switch the driving mode of the vehicle 1 based on an output signal from the seating sensor or the face direction sensor.

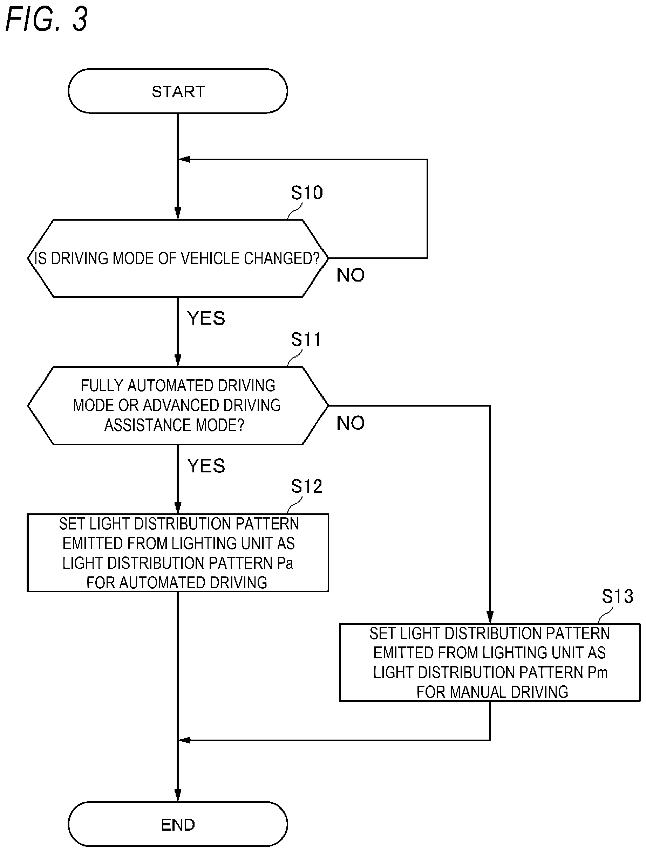

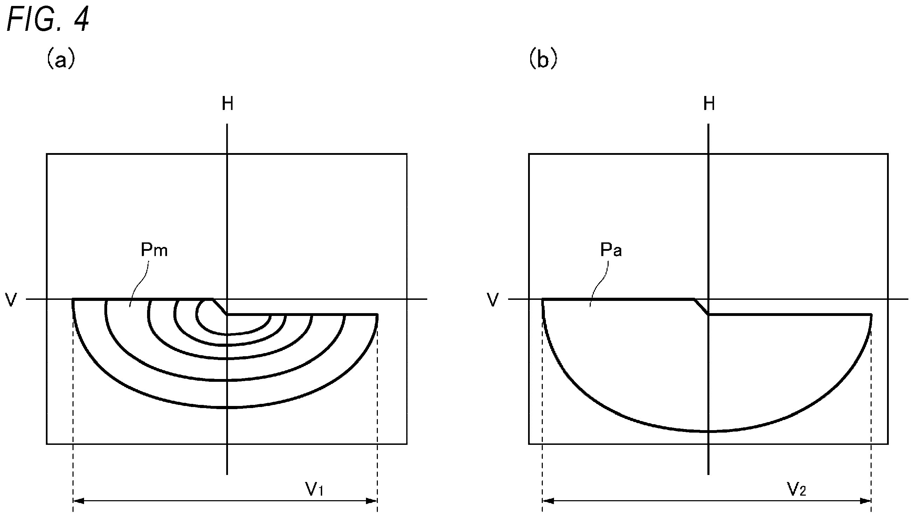

Next, an example of an operation flow of the lighting system 4a according to the present embodiment will be described with reference to Figs. 3 and 4. Fig. 3 is a flowchart showing the example of the operation flow of the lighting system 4a. Fig. 4(a) is a diagram showing a light distribution pattern Pm formed by the lighting unit 42a when the driving mode of the vehicle 1 is the manual driving mode or the driving assistance mode. Fig. 4(b) is a diagram showing a light distribution pattern Pa formed by the lighting unit 42a when the driving mode of the vehicle 1 is the advanced driving assistance mode or the fully automated driving mode. Here, the light distribution patterns Pa and Pm shown in Fig. 4 indicate the light distribution patterns projected on a virtual screen virtually installed 25 m in front of the vehicle 1. A surface of the virtual screen is perpendicular to the front-rear direction of the vehicle 1. Further, contour lines of the light distribution pattern Pm shown in Fig. 4(a) are isoilluminance curves.

In the present embodiment, only the operation flow of the lighting system 4a will be described for convenience of description, but it is to be noted that the operation flow of the lighting system 4a can also be applied to the lighting system 4b.

As shown in Fig. 3, in step S10, the control unit 40a determines whether the driving mode of the vehicle 1 has been changed. For example, when the driving mode of the vehicle 1 is changed, the vehicle control unit 3 transmits information on the changed driving mode to the control unit 40a. Thereafter, the control unit 40a determines that the driving mode of the vehicle 1 has been changed when receiving information on the changed driving mode. When the determination result in step S10 is YES, the control unit 40a determines whether the changed driving mode is the fully automated driving mode or the advanced driving assistance mode (step S11). On the other hand, when the determination result of step S10 is NO, the control unit 40a waits until the driving mode of the vehicle 1 is changed.

Next, when it is determined that the changed driving mode is the fully automated driving mode or the advanced driving assistance mode (YES in Step S11), the control unit 40a sets the light distribution pattern emitted from the lighting unit 42a as a light distribution pattern Pa for automated driving (step S12). Fig. 4(b) shows a light distribution pattern suitable for imaging the surrounding environment of the vehicle 1 by the camera 43a as an example of the light distribution pattern Pa for automated driving. Further, the control unit 40a controls the lighting unit 42a so as to set the brightness of the light distribution pattern Pa as brightness Ba (second brightness). Here, "brightness of the light distribution pattern" may be defined as the illuminance of an illumination area illuminated by the light distribution pattern (for example, an illumination area of the virtual screen illuminated by the light distribution pattern or the like), or may be defined as the luminous intensity of the lighting unit 42a forming the light distribution pattern. Here, the brightness Ba of the light distribution pattern Pa is brightness necessary for the camera 43a to sufficiently image the surrounding environment of the vehicle 1. Further, the control unit 40a may control the lighting unit 42a such that the brightness Ba of the light distribution pattern Pa becomes uniform. More specifically, as shown in Fig. 4(b), the control unit 40a may control the lighting unit 42a such that the illuminance of the illumination area of the virtual screen illuminated by the light distribution pattern Pa becomes uniform. In this case, since the illuminance of the illumination area illuminated by the light distribution pattern Pa becomes uniform, the surrounding environment of the vehicle 1 can be successfully imaged by the camera 43a. Further, by controlling dimming of the plurality of light emitting elements of the lighting units 42a arranged in a matrix, the control unit 40a can control the lighting unit 42a such that the illuminance of the illumination area illuminated by the light distribution pattern Pa becomes uniform.

"The brightness Ba of the light distribution pattern Pa is uniform" does not mean that the brightness Ba of the light distribution pattern Pa is completely uniform. That is, the illuminance of the illumination area illuminated by the light distribution pattern Pa may not be completely uniform. In this respect, the uniformity of the brightness Ba of the light distribution pattern Pa is at least higher than the uniformity of brightness Bm of the light distribution pattern Pm for the manual driving mode or the driving assistance mode. Specifically, in the illumination area of the virtual screen illuminated by the light distribution pattern Pa, maximum illuminance is Ba_max and minimum illuminance is Ba_min. On the other hand, in the illumination area of the virtual screen illuminated by the light distribution pattern Pm, maximum illuminance is Bm_max and minimum illuminance is Bm_min. In this case, a relational expression of (Ba_max - Ba_min) < (Bm_max - Bm_min) is satisfied. Further, a relational expression of (Ba_min/Ba_max) > (Bm_min/Bm_max) is satisfied. Further, (Ba_min/Ba_max) × 100% is preferably 95% or higher and lower than 100%.

Next, when it is determined that the changed driving mode is not the fully automated driving mode or the advanced driving assistance mode (in other words, the changed driving mode is the manual driving mode or the driving assistance mode) (NO in Step S11), the control unit 40a sets the light distribution pattern emitted from the lighting unit 42a as the light distribution pattern Pm for the manual driving (step S13). Fig. 4(a) shows a low-beam light distribution pattern as an example of the light distribution pattern Pm for the manual driving, but the light distribution pattern Pm may be a high-beam light distribution pattern. Further, the control unit 40a controls the lighting unit 42a so as to set the brightness of the light distribution pattern Pm as the brightness Bm (first brightness). Here, the brightness Bm is higher than the brightness Ba. Particularly, the brightness Bm of the light distribution pattern Pm is brightness necessary for the driver to sufficiently see the surrounding environment of the vehicle 1.

According to the present embodiment, when the driving mode of the vehicle 1 is the manual driving mode or the driving assistance mode, the brightness of the light distribution pattern Pm is set as the brightness Bm; when the driving mode of the vehicle 1 is the advanced driving assistance mode or the fully automated driving mode, the brightness of the light distribution pattern Pa is set as the brightness Ba lower than the brightness Bm. In this way, the control unit 40a (lighting control unit) is configured to change the brightness of the light distribution pattern formed by the lighting unit 42a according to the driving mode of the vehicle 1. Therefore, the lighting system 4a capable of optimizing the brightness of the lighting pattern which is formed by the lighting unit 42a in view of the driving mode of the vehicle 1 can be provided.

Further, the brightness of the light distribution pattern decreases (Ba < Bm) when the driving mode of the vehicle 1 is the advanced driving assistance mode or the fully automated driving mode. For example, when the vehicle 1 is traveling in the manual driving mode or the driving assistance mode, the brightness Bm of the light distribution pattern Pm needs to be set as such brightness that the driver can sufficiently see the surrounding environment of the vehicle 1. When the vehicle 1 is traveling in the advanced driving assistance mode or the fully automated driving mode, since the vehicle control unit 3, which is on behalf of the driver, controls the traveling of the vehicle 1 based on the traveling state information, the surrounding environment information, the current location information and/or the map information or the like, power consumption by the battery mounted on the vehicle 1 is severe. Further, the camera 43a can acquire the surrounding environment information of the vehicle 1 with the brightness of the light distribution pattern lower than the brightness necessary for the driver to sufficiently see the surrounding environment of the vehicle 1. Therefore, when the driving mode of the vehicle 1 is the advanced driving assistance mode or the fully automated driving mode, since the brightness of the light distribution pattern can be lowered, it becomes possible to suppress the power consumption of the battery.

Further, in the embodiment, the lighting unit 42a, the camera 43a, the LiDAR unit 44a, and the millimeter wave radar 45a are disposed in the space Sa formed by the housing 24a and the light-transmitting cover 22a. In such a configuration structure, after a part of the light emitted from the lighting unit 42a is internally reflected by the light-transmitting cover 22a, the part of the internally reflected light may be incident on the light receiving unit of the LiDAR unit 44a. In this case, the light incident on the light receiving unit of the LiDAR unit 44a may adversely affect an output result (3D mapping data) of the LiDAR unit 44a. On the other hand, since the brightness of the light distribution pattern Pa is set as the brightness Ba which is lower than the brightness Bm of the light distribution pattern Pm when the driving mode of the vehicle 1 is the advanced driving assistance mode or the fully automated driving mode, it is possible to suitably prevent the light incident on the light receiving unit of the LiDAR unit 44a from adversely affecting the 3D mapping data. Accordingly, it is possible to reduce the power consumption of the battery and improve the reliability of the LiDAR unit Fsecond eefefe.

Further, according to the invention, the control unit 40a is configured to change the shape of the light distribution pattern according to the driving mode of the vehicle 1. In this case, the lighting system 4a which can optimize the brightness and shape of the light distribution pattern in view of the driving mode of the vehicle 1 can be provided. Particularly, when the driving mode of the vehicle 1 is changed from the manual driving mode or the driving assistance mode to the advanced driving assistance mode or the fully automated driving mode, the light distribution pattern formed by the lighting unit 42a is changed from the light distribution pattern Pm to the light distribution pattern Pa. In this case, the shape of the light distribution pattern Pm projected on the virtual screen shown in Fig. 4(a) is different from the shape of the light distribution pattern Pa projected on the virtual screen shown in Fig. 4(b). Specifically, both of the light distribution patterns Pm, Pa projected on the virtual screen have a cut-offline, but have different widths V in the horizontal direction. According to the invention, a width V2 in the horizontal direction of the light distribution pattern Pa projected on the virtual screen is larger than a width V1 in the horizontal direction of the light distribution pattern Pm projected on the virtual screen. In this way, the illumination area of the virtual screen illuminated by the light distribution pattern Pa is larger than the illumination area of the virtual screen illuminated by the light distribution pattern Pm. By making the illumination area of the light distribution pattern Pa is larger than the illumination area of the light distribution pattern Pm, the light distribution pattern suitable for imaging the surrounding environment of the vehicle 1 by the camera 43a can be provided. In this respect, when the illumination area of the light distribution pattern Pa is smaller than an angle of view of the camera 43a, since the camera 43a cannot acquire appropriate image data at night, it may be difficult to accurately specify the surrounding environment based on the image data.

Hereinafter, an example which is not covered by the claimed invention will be described with reference to the drawings of figures 5 to 10. Descriptions of members having the same reference numerals as members that are already described in the description of the present embodiment will be omitted for convenience of description. Dimensions of members shown in the drawings may be different from actual dimensions thereof for convenience of description.

First, a vehicle 1A according to the present example will be described with reference to Fig. 5. Fig. 5 is a schematic diagram showing a top view of the vehicle 1A including a vehicle system 2A. As shown in Fig. 5, the vehicle 1A (automobile) is capable of traveling in the automated driving mode and includes the vehicle system 2A. The vehicle system 2A includes at least the vehicle control unit 3, a left front lighting system 104a (hereinafter simply referred to as "lighting system 104a"), a right front lighting system 104b (hereinafter simply referred to as "lighting system 104b"), a left rear lighting system 104c (hereinafter simply referred to as "lighting system 104c"), and a right rear lighting system 104d (hereinafter simply referred to as "lighting system 104d").

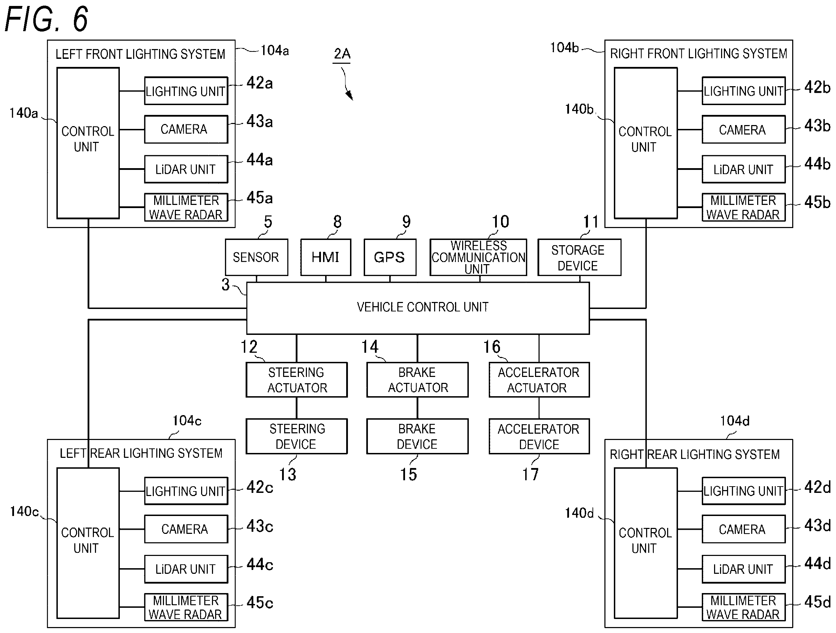

Next, the vehicle system 2A shown in Fig. 5 will be described in detail with reference to Fig. 6. Fig. 6 is a block diagram showing the vehicle system 2A. As shown in Fig. 6, the vehicle system 2A includes the vehicle control unit 3, the lighting systems 104a to 104d, the 23 sensor 5, the HMI 8, the GPS 9, the wireless communication unit 10, and the storage device 11. Further, the vehicle system 2A includes the steering actuator 12, the steering device 13, the brake actuator 14, the brake device 15, the accelerator actuator 16, and the accelerator device 17. Further, the vehicle system 2A includes the battery (not shown) configured to supply power.

The lighting system 104a further includes a control unit 140a, the lighting unit 42a, the camera 43a, the LiDAR unit 44a, and the millimeter wave radar 45a. As shown in Fig. 5, the control unit 140a, the lighting unit 42a, the camera 43a, the LiDAR unit 44a, and the millimeter wave radar 45a are disposed in the space Sa (light chamber) formed by the housing 24a and the light-transmitting cover 22a. The control unit 140a may be disposed at the predetermined location of the vehicle 1 other than the space Sa. For example, the control unit 140a may be configured integrally with the vehicle control unit 3.

The control unit 140a includes, for example, at least one electronic control unit (ECU). The electronic control unit may include at least one microcontroller which includes one or more processors and one or more memories, and another electronic circuit (for example, a transistor or the like). The processor is, for example, a CPU, an MPU, a GPU, and/or a TPU. The CPU may include a plurality of CPU cores. The GPU may include a plurality of GPU cores. The memory includes a ROM and a RAM The ROM may store a surrounding environment specifying program for specifying program surrounding environment of the vehicle 1A. For example, the surrounding environment specifying program is constructed by supervised or unsupervised machine learning, such as deep learning, using a neural network. The RAM may temporarily store the surrounding environment specifying program, the image data acquired by the camera 43a, the three-dimensional mapping data (point cloud data) acquired by the LiDAR unit 44a, and/or the detection data acquired by the millimeter wave radar 45a, or the like. The processor may be configured to develop a program selected from the surrounding environment specifying program stored in the ROM onto the RAM, and execute various kinds of processing in cooperation with the RAM The electronic control unit (ECU) may include at least one integrated circuit such as the ASIC or the FPGA. Further, the electronic control unit may include a combination of at least one microcontroller and at least one integrated circuit (the FPGA or the like).

The control unit 140a may be configured to individually supply an electric signal (for example, a pulse width modulation (PWM) signal) to each of the plurality of light emitting elements provided in the lighting unit 42a. In this way, the control unit 140a can individually select the light emitting elements to which the electric signal is supplied and can adjust a duty ratio of the electric signal for each light emitting element. That is, the control unit 140a can select a light emitting element to be turned on or off from the plurality of light emitting elements arranged in a matrix, and can determine the luminance of the light emitting element that is turned on. Therefore, the control unit 140a (lighting control unit) can change the shape and brightness of the light distribution pattern emitted forward from the lighting unit 42a.

The lighting system 104b further includes a control unit 140b, the lighting unit 42b, the camera 43b, the LiDAR unit 44b, and the millimeter wave radar 45b. As shown in Fig. 5, the control unit 140b, the lighting unit 42b, the camera 43b, the LiDAR unit 44b, and the millimeter wave radar 45b are disposed in the space Sb (light chamber) formed by the housing 24b and the light-transmitting cover 22b. The control unit 140b may be disposed at the predetermined location of the vehicle 1 other than the space Sb. For example, the control unit 140b may be configured integrally with the vehicle control unit 3. The control unit 140b may have a function and a configuration similar to those of the control unit 140a. The lighting unit 42b may have a function and a configuration similar to those of the lighting unit 42a. In this respect, the lighting unit 42a functions as the left headlamp unit, while the illumination unit 42b functions as a right headlamp unit. The camera 43b may have a function and a configuration similar to those of the camera 43a. The LiDAR unit 44b may have a function and a configuration similar to those of the LiDAR unit 44a. The millimeter wave radar 45b may have a function and a configuration similar to those of the millimeter wave radar 45a.

The lighting system 104c further includes a control unit 140c, the lighting unit 42c, the camera 43c, the LiDAR unit 44c, and the millimeter wave radar 45c. As shown in Fig. 5, the control unit 140c, the lighting unit 42c, the camera 43c, the LiDAR unit 44c, and the millimeter wave radar 45c are disposed in the space Sc (light chamber) formed by the housing 24c and the light-transmitting cover 22c. The control unit 140c may be disposed at the predetermined location of the vehicle 1A other than the space Sc. For example, the control unit 140c may be configured integrally with the vehicle control unit 3. The control unit 140c may have a function and a configuration similar to those of the control unit 140a.

The lighting system 104d further includes a control unit 140d, the lighting unit 42d, the camera 43d, the LiDAR unit 44d, and the millimeter wave radar 45d. As shown in Fig. 5, the control unit 140d, the lighting unit 42d, the camera 43d, the LiDAR unit 44d, and the millimeter wave radar 45d are disposed in the space Sd (light chamber) formed by the housing 24d and the light-transmitting cover 22d. The control unit 140d may be disposed at the predetermined location of the vehicle 1A other than the space Sd. For example, the control unit 140d may be configured integrally with the vehicle control unit 3. The control unit 140d may have a function and a configuration similar to those of the control unit 140c. The lighting unit 42d may have a function and a configuration similar to those of the lighting unit 42c. The camera 43d may have a function and a configuration similar to those of the camera 43c. The LiDAR unit 44d may have a function and a configuration similar to those of the LiDAR unit 44c. The millimeter wave radar 45d may have a function and a configuration similar to those of the millimeter wave radar 45c.

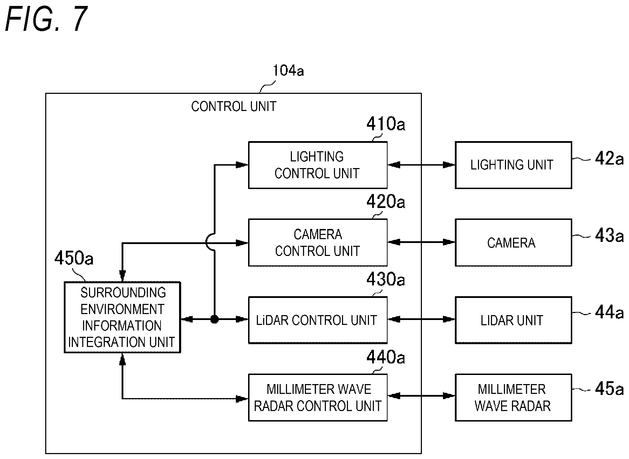

Next, functions of the control unit 140a will be described with reference to Fig. 7. As shown in Fig. 7, the control unit 140a is configured to control operations of the lighting unit 42a, the camera 43a, the LiDAR unit 44a, and the millimeter wave radar 45a. In this respect, the control unit 140a includes a lighting control unit 410a, a camera control unit 420a (an example of a second surrounding environment information generation unit), a LiDAR control unit 430a (an example of a first surrounding environment information generation unit), a millimeter wave radar control unit 440a, and a surrounding environment information integration unit 450a.

The lighting control unit 410a is configured to change the brightness of light emitted from the lighting unit 42a and illuminating an object (for example, a pedestrian) based on surrounding environment information of the vehicle 1A output from the LiDAR control unit 430a. Here, the surrounding environment information output from the LiDAR control unit 430a may include information on an attribute of the object present outside the vehicle 1A and information on a distance D between the object and the vehicle 1A.

The camera control unit 420a is configured to control the operation of the camera 43a and generate surrounding environment information of the vehicle 1A (hereinafter referred to as surrounding environment information I1) based on the image data output from the camera 43a. The LiDAR control unit 430a is configured to control the operation of the LiDAR unit 44a and generate surrounding environment information of the vehicle 1A (hereinafter referred to as surrounding environment information I2) based on the 3D mapping data output from the LiDAR unit 44a. The camera control unit 440a is configured to control the operation of the millimeter wave radar 45a and generate surrounding environment information of the vehicle 1A (hereinafter referred to as surrounding environment information I3) based on the detection data output from the camera 45a. The surrounding environment information integration unit 450a is configured to generate integrated surrounding environment information If by integrating the surrounding environment information I1, I2, and I3. Here, the surrounding environment information If may include surrounding environment information (for example, an attribute of the object, an object position with respect to the vehicle 1A, the distance between the vehicle 1A and the object and/or an object speed with respect to the vehicle 1A) in a detection area in which a detection area of the camera 43a, a detection area of the LiDAR unit 44a, and a detection area of the millimeter wave radar 45a are combined. The surrounding environment information integration unit 450a transmits the surrounding environment information If to the vehicle control unit 3.

The control units 140b, 140c, and 140d may have a function similar to those of the control unit 140a. That is, each of the control units 140b to 140d may include a lighting control unit, a camera control unit, a LiDAR control unit, a millimeter wave control unit, and a surrounding environment information integration unit. Further, the surrounding environment information integration unit of each of the control units 140b, 140c may transmit the surrounding environment information to the vehicle control unit 3. The vehicle control unit 3 may control the traveling of the vehicle 1A based on the surrounding environment information If transmitted from each of the control units 140a to 140d and other information (traveling control information, current location information, map information or the like).

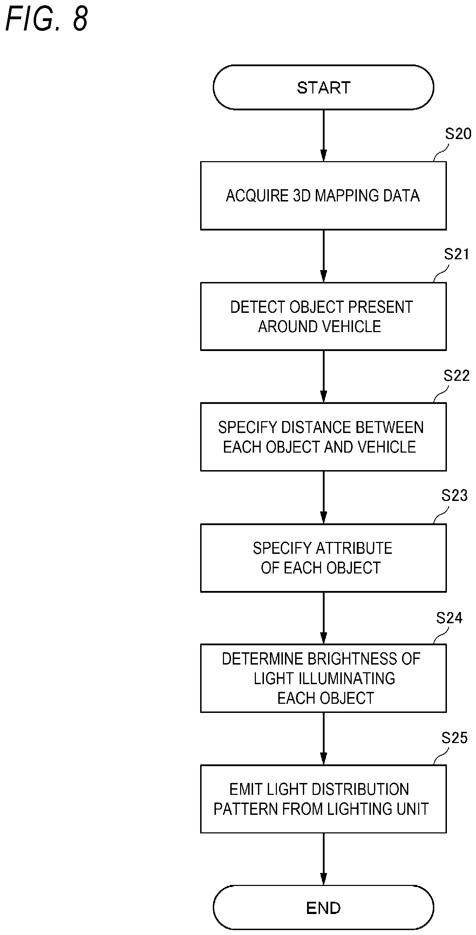

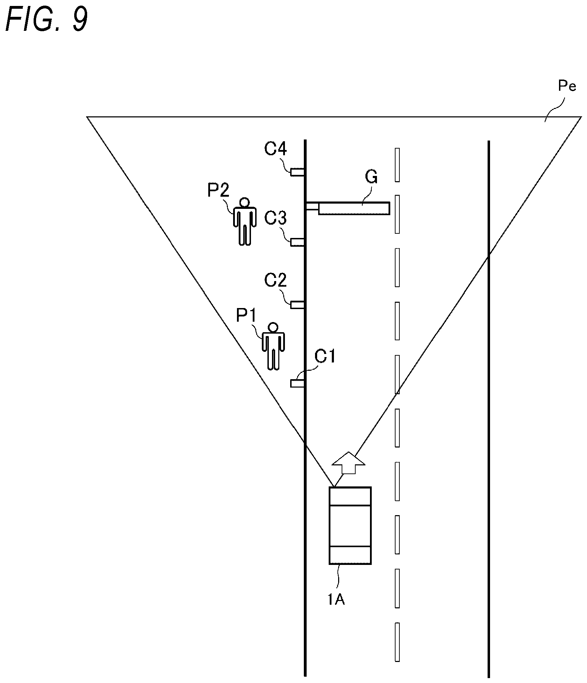

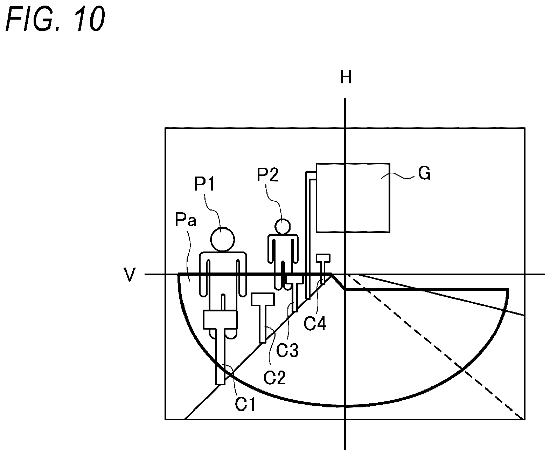

Next, an example of an operation flow of the lighting system will be described with reference to Figs. 8 to 10. Fig. 8 is a flowchart showing an example of the operation flow of the lighting system 104a according to the present example. Fig. 9 is a diagram showing a state of the vehicle 1A that emits a light distribution pattern Pe from the lighting unit 42a of the lighting system 104a toward an object present in front of the vehicle 1A. Fig. 10 is a diagram showing an example of the light distribution pattern Pe projected on a virtual screen virtually installed 25 m in front of the vehicle 1A. Here, the virtual screen is perpendicular to the front-rear direction of the vehicle 1A. Further, in Fig. 10, the environment in front of the vehicle 1A shown in Fig. 9 is shown through the virtual screen.

In the present example, only the operation flow of the lighting system 104a will be described for convenience of description, but it is to be noted that the operation flow of the lighting system 104a can also be applied to the lighting system 104b. In the description of the present example, it is assumed that the vehicle 1A is traveling in the automated driving mode (particularly, the advanced driving assistance mode or the fully automated driving mode). In this case, the light distribution pattern Pe emitted from the lighting unit 42a is a light distribution pattern for automatic driving suitable for imaging the surrounding environment of the vehicle 1A by the camera 43a.

First, as shown in Fig. 8, the LiDAR unit 44a (an example of a laser radar) acquires the 3D mapping data indicating the surrounding environment of the vehicle 1A (step S20). Next, the LiDAR control unit 430a (an example of the first surrounding environment information generation unit) shown in Fig. 7 detects the object present outside the vehicle 1A (particularly, a front area) based on the 3D mapping data acquired from the LiDAR unit 44a (step S21). As shown in Fig. 9, the object present in the front area of the vehicle 1A includes pedestrians PI, P2, a guide sign G (an example of signs), and delineators C1 to C4. That is, the pedestrians P1 and P2, the guide sign G (an example of the signs), and the delineators C1 to C4 are located in the detection area of the LiDAR unit 44a. Further, at the stage of step S21, the LiDAR control unit 430a only detects the presence of the object, and does not specify the attribute of the object.

Next, the LiDAR control unit 430a specifies a distance D between each object (the pedestrian P1 or the like) and the vehicle 1A (step S22). Here, the distance D between the object and the vehicle 1A may be the length of a line segment which connects the coordinates of the object and the coordinates of the vehicle 1A (particularly, the coordinates of the LiDAR unit 44a), and may be a distance between the object and the vehicle in the front-rear direction of the vehicle 1A.

Next, the LiDAR control unit 430a specifies the attribute of each object (step S23). Here, to specify the attribute of the object is to specify what the object is. For example, the LiDAR control unit 430a identifies what each object is by analyzing feature points of the object based on the surrounding environment specifying program.

Next, in step S24, the lighting control unit 410a determines the brightness B of light that illuminates each object according to the attribute of each object and the distance D between each object and the vehicle 1A. Here, the light illuminating each object is emitted from the lighting unit 42a and forms the light distribution pattern Pe. Further, "the brightness B of the light illuminating the object" may be defined as the illuminance of the illumination area of the object illuminated by the light distribution pattern Pe, or defined as the luminous intensity of the lighting unit 42a in the direction toward the object. Further, "the brightness B of light illuminating the object" may be defined as the amount of light or the degree of condensing (light flux) of the light that irradiates the object.

Particularly, objects with high reflectance are illuminated by light with low brightness, while objects with low reflectance are illuminated by light with high brightness. That is, the lighting control unit 410a determines the brightness B of the light illuminating each object such that the brightness (the first brightness) of light illuminating objects with high reflectance (the guide sign G or the delineators C1 to C4) is lower than the brightness (the second brightness) of light illuminating objects with low reflectance (the pedestrians P1, P2), Further, the brightness of the light illuminating the object increases as the distance D between the object and the vehicle 1A increases. That is, the lighting control unit 410a determines the brightness B of the light illuminating each object such that the brightness B of the light illuminating the object increases as the distance D between the object and the vehicle 1A increases.

For example, the brightness B of light that illuminates a pedestrian P0 present at a position away from the vehicle 1A by a reference distance $D_0$ is set as brightness $B_{p0}$. In this case, as shown in Fig. 9, brightness $B_{p1}$ of light that illuminates a pedestrian $P_1$ present at a position away from the vehicle 1A by a distance $D_1$ ($D_1 < D_0$) may be determined by $B_{p1} = \alpha_1 \times B_{p0}$ ($\alpha_1 < 1$). On the other hand, brightness $B_{p2}$ of light that illuminates a pedestrian $P_2$ present at a position away from the vehicle 1A by a reference distance $D_2$ ($D_2 > D_0$) may be determined by $B_{p2} = \alpha_2 \times B_{p0}$ ($\alpha_2 > 1$). Therefore, after the coefficient $\alpha$ ($\alpha_1$, $\alpha_2$) is determined according to the distance D between the vehicle 1A and the object, the brightness B of light that illuminates the object may be determined based on the determined coefficient $\alpha$. A relational expression or a look-up table indicating a relationship between the distance D and the coefficient $\alpha$ may be stored in a memory of the lighting control unit 140a.

On the other hand, brightness $B_{c0}$ of light that illuminates a delineator $C_0$ present at a position away from the vehicle 1A by the distance $D_0$ may be determined by $B_{c0} = \beta_1 \times B_{p0}$ ($\beta_1 < 1$). Since the brightness $B_{c0}$ of the light illuminating the delineator $C_0$ is smaller than the brightness $B_{p0}$ of the light illuminating the pedestrian $P_0$, the light brightness $B_{c0}$ illuminating the delineator $C_0$ is determined by multiplying the brightness $B_{p0}$ of the light by a coefficient $\beta_1$ ($< 1$). Therefore, when the pedestrian $P_0$ and the delineator $C_0$ are present at positions away from the vehicle 1A by the distance $D_0$, the brightness $B_{p0}$ illuminating the pedestrian $P_0$ is higher than the brightness $B_{c0}$ of the light illuminating the delineator $C_0$. Further, brightness $B_{c1}$ of light that illuminates the delineator C1 present at the position away from the vehicle 1A by the distance $D_1$ ($D_1 < D_0$) may be determined by $B_{c1} = a_1 \times B_{c0} = a_1 \times \beta_1 \times B_{p0}$ ($\beta_1 < 1$, $a_1 < 1$). Therefore, the brightness $B_{c1}$ of the light illuminating the delineator C1 is determined based on the coefficient $\alpha_1$ associated with the distance D and the coefficient $\beta_1$ associated with the attribute of the object. It is to be noted that in this example, when the attribute of the object is a pedestrian, the coefficient $\beta$ associated with the attribute of the object is 1.

Further, brightness $B_{g0}$ of light that illuminates a guide sign $G_0$ present at the position away from the vehicle 1A by the distance $D_0$ may be determined by $B_{g0} = \beta_2 \times B_{p0}$ ($\beta_2 < 1$). Information on the coefficients $\beta_1$, $\beta_2$ associated with the attribute of the object may be stored in the memory of the control unit 140a.

Further, it is preferable that the brightness of the light illuminating the head of the pedestrian P is lower than the brightness of the light illuminating the body other than the head of the pedestrian P. In this case, it is possible to suitably prevent glare light from being given to the pedestrian P.

Next, returning to the description of the operation flow shown in Fig. 8, in step S25, the lighting control unit 410a controls the lighting unit 42a such that the lighting unit 42a emits the light distribution pattern Pe forward according to the determination of the brightness of the light that illuminates each object. Particularly, the lighting control unit 410a determines the brightness of light that illuminates each object. Thereafter, the lighting control unit 410a can adjust the brightness of the light that illuminates each object by adjusting the luminance of the plurality of light emitting elements of the lighting unit 42a arranged in a matrix shape by the PWM control or the like. Fig. 10 is a diagram showing an example of the light distribution pattern Pe projected on the virtual screen. In the light distribution pattern Pe, the brightness $B_{p2}$ of the light that illuminates the pedestrian P2 is higher than the brightness $B_{P1}$ of the light that illuminates the pedestrian P1. Further, when the brightness of the light illuminating the delineators C1 to C4 is $B_{c1}$, $B_{c2}$, $B_{c3}$, and $B_{c4}$, the relationship of $B_{c1} < B_{c2} < B_{c3} < B_{c4}$ is established. The brightness $B_{p1}$ of the light that illuminates the pedestrian P1 may be higher than the brightness $B_{c4}$ of the light that illuminates the delineator C4.

According to the present example, the attribute of the object (for example, a pedestrian or the like) and the distance D between the object and the vehicle 1A are specified based on the 3D mapping data acquired by the LiDAR unit 44a. Thereafter, the brightness B (for example, the illuminance of the illumination area of the object illuminated by the light distribution pattern Pe, the luminous intensity of the lighting unit 42a in the direction toward the object, or the like) of the light that illuminates the object is changed according to the attribute of the object and the distance D between the object and the vehicle 1A. Therefore, the lighting system 104a capable of optimizing the brightness B of the light which illuminates the object based on the information on the object present outside the vehicle 1A can be provided. As already described, since the lighting system 104b also has a function similar to that of the lighting system 104a, the brightness B of the light that illuminates the object can be optimized based on the information on the object present outside the vehicle 1A.

Further, since the brightness of the light illuminating the object can be optimized based on the information on the object present outside the vehicle 1A, a light distribution pattern for a camera suitable for imaging the surrounding environment of the vehicle 1A using the camera 43a can be obtained. In this regard, when a dynamic range of the camera 43a is not wide, if the brightness B of light that illuminates the object with high reflectance is high, the object is likely to be whitened out in the image data. On the other hand, if the brightness B of light that illuminates the object with low reflectance is low, the object is likely to be blacked out in the image data. In the present example, the object with high reflectance (a guide sign, a delineator or the like) is illuminated by the light with low brightness, while the object with low reflectance (a pedestrian or the like) is illuminated by the light with high brightness. Therefore, it is possible to suitably suppress the occurrence of black-out or white-out (halation) in the image data acquired by the camera 43a, and it is possible to dramatically improve the detection accuracy of the object based on the image data. Accordingly, it is possible to improve the accuracy of the surrounding environment information 12 generated based on the image data. Further, it is possible to prevent glare light from being given to the driver by reflected light reflected by the object (a sign or the like) having high reflectance while the visibility of the driver or an occupant with respect to the object (a pedestrian or the like) having low reflectance is improved.

Further, the brightness of the light illuminating the object increases as the distance D between the object and the vehicle 1A increases. Therefore, for example, when the distance D between the object and the vehicle 1A is large, although the object is displayed small in the image data acquired by the camera 43a (that is, the area occupied by the object in the image data is small), since the brightness of the light that illuminates the object is high, the black-out of the object can be prevented in the image data. Therefore, it is possible to improve the detection accuracy of the object based on the image data, and it is possible to improve the degree of recognition of the driver or the occupant with respect to the object present at a position away from the vehicle 1A.

In the present example, although the light distribution pattern for automated driving suitable for imaging by the camera is given as an example of the light distribution pattern Pe, the light distribution pattern Pe may be a light distribution pattern for manual driving such as the low-beam light distribution pattern or the high-beam light distribution pattern. In this case, while the vehicle 1A is traveling in the manual driving mode, the brightness of the light that illuminates each object present in the front area of the vehicle 1A is changed according to the attribute of the object and the distance D between the object and the vehicle 1A. Therefore, it is possible to prevent the glare light from being given to the driver by the light reflected by the object having high reflectance while the visibility of the driver with respect to the object having low reflectance is improved. Therefore, the lighting system capable of ensure high traveling safety in the manual driving can be provided.

Further, although the pedestrian is exemplified as an example of the object with low reflectance, and the delineator and the guide sign are exemplified as examples of the object with high reflectance, an object having low reflectance and an object having high reflectance are not limited to the above. Furthermore, although the guide sign G is exemplified as an example of the sign, the sign is not limited to the guide sign, and may be a warning sign, a regulation sign, or an instruction sign.

Although an embodiment of the present invention has been described, it goes without saying that the technical scope of the present invention should not be interpreted as being limited by the description of the present embodiment. It should be appreciated by those skilled in the art that the present embodiment is merely an example and that various modifications of the embodiment can be made within the scope of the invention defined in the claims.

In the present embodiment, the driving mode of the vehicle has been described as including the fully automated driving mode, the advanced driving assistance mode, the driving assistance mode, and the manual driving mode, but the driving mode of the vehicle should not be limited to these four modes. The classification of the driving mode of the vehicle may be appropriately changed according to laws or regulations relating to automated driving in each country. Similarly, the definitions of the "fully automated driving mode", the "advanced driving assistance mode", and the "driving assistance mode" described in the description of the present embodiment are merely examples, and the definitions may be appropriately changed according to the laws or the regulations relating to the automated driving in each country.

**Claims**

1. A vehicle lighting system (4a) for use in a vehicle capable of traveling in an automated driving mode and a manual driving mode, the vehicle lighting system (4a) comprising:

   a lighting unit (42a) configured to form a light distribution pattern by emitting light toward the outside of the vehicle; and
   a lighting control unit (40a) configured to change the brightness of the light distribution pattern according to a driving mode of the vehicle,
   **characterised in that** the lighting control unit (40a) is further configured to change a shape of the light distribution pattern according to the driving mode of the vehicle such that a width (V2) in the horizontal direction of the light distribution pattern (Pa) projected on a virtual screen having a surface perpendicular to the front-rear direction of the vehicle in the automated driving mode is larger than a width (V1) in the horizontal direction of the light distribution pattern projected on the virtual screen in the manual driving mode.

2. The vehicle lighting system (4a) according to claim 1,
   wherein the lighting control unit (40a):

   sets the brightness of the light distribution pattern as a first brightness when the driving mode of the vehicle is the manual driving mode, and
   sets the brightness of the light distribution pattern as a second brightness which is lower than the first brightness when the driving mode of the vehicle (1) is an advanced driving assistance mode or a fully automated driving mode.

3. The vehicle lighting system (4a) according to claim 2, further comprising:

   a camera (43a) configured to detect the surrounding environment of the vehicle;
   a laser radar (44a) configured to detect the surrounding environment of the vehicle;
   a housing (24a); and
   a cover (22a) attached to the housing,
   wherein the lighting unit (42a), the camera (43a), and the laser radar (44a) is disposed in a space (Sa) formed by the housing (24a) and the cover (22a).

4. The vehicle lighting system (4a) according to any one of claims 1 to 3,
   wherein when the driving mode of the vehicle is the automated driving mode, the lighting control unit (40a) is configured to control the lighting unit (42a) such that the illuminance of an illumination area illuminated by the light distribution pattern becomes uniform.

5. A vehicle (1) capable of traveling in an automated driving mode and a manual driving mode, the vehicle (1) comprising:
   the vehicle lighting system (4a) according to any one of claims 1 to 4.

**Patentansprüche**

1. Fahrzeugbeleuchtungssystem (4a) zur Verwendung in einem Fahrzeug, das in einem automatisierten Fahrmodus und einem manuellen Fahrmodus fahren kann, wobei das Fahrzeugbeleuchtungssystem (4a) Folgendes umfasst:

   eine Beleuchtungseinheit (42a), die dafür ausgelegt ist, ein Lichtverteilungsmuster zu bilden, indem sie Licht in Richtung des Fahrzeugäußeren ausstrahlt; und
   eine Beleuchtungssteuerungseinheit (40a), die dafür ausgelegt ist, die Helligkeit des Lichtverteilungsmusters einem Fahrmodus des Fahrzeugs entsprechend zu ändern,
   **dadurch gekennzeichnet, dass** die Beleuchtungssteuerungseinheit (40a) ferner dafür ausgelegt ist, eine Form des Lichtverteilungsmusters dem Fahrmodus des Fahrzeugs entsprechend so zu ändern, dass eine Breite (V2) in der horizontalen Richtung des Lichtverteilungsmusters (Pa), das im automatisierten Fahrmodus auf eine virtuelle Projektionswand mit einer senkrecht zur Front-Heck-Richtung des Fahrzeugs verlaufenden Oberfläche projiziert wird, größer ist als eine Breite (V1) in der horizontalen Richtung des Lichtverteilungsmusters, das im manuellen Fahrmodus auf die virtuelle Projektionswand projiziert wird.

2. Fahrzeugbeleuchtungssystem (4a) gemäß Anspruch 1,
   wobei die Beleuchtungssteuerungseinheit (40a)

   die Helligkeit des Lichtverteilungsmusters auf eine erste Helligkeit einstellt, wenn der Fahrmodus des Fahrzeugs der manuelle Fahrmodus ist, und
   die Helligkeit des Lichtverteilungsmusters auf eine zweite Helligkeit einstellt, die geringer ist als die erste Helligkeit, wenn der Fahrmodus des Fahrzeugs (1) ein Fahrassistenzmodus oder ein voll automatisierter Fahrmodus ist.

3. Fahrzeugbeleuchtungssystem (4a) gemäß Anspruch 2, ferner umfassend:

   eine Kamera (43a), die dafür ausgelegt ist, die Umgebung des Fahrzeugs zu erfassen;
   einen Laserradar (44a), der dafür ausgelegt ist, die Umgebung des Fahrzeugs zu erfassen;
   ein Gehäuse (24a); und
   einen Deckel (22a), der am Gehäuse angebracht ist,
   wobei die Beleuchtungseinheit (42a), die Kamera (43a) und der Laserradar (44a) in einem Raum (Sa) angeordnet sind, der durch das Gehäuse (24a) und den Deckel (22a) gebildet wird.

4. Fahrzeugbeleuchtungssystem (4a) gemäß einem der Ansprüche 1 bis 3,
   wobei der Fahrmodus des Fahrzeugs der automatisierte Fahrmodus ist, die Beleuchtungssteuerungseinheit (40a) dafür ausgelegt ist, die Beleuchtungseinheit (42a) so zu steuern, dass die Beleuchtungsstärke eines vom Lichtverteilungsmuster beleuchteten Beleuchtungsbereichs gleichmäßig wird.

5. Fahrzeug (1), das in einem automatisierten Fahrmodus und einem manuellen Fahrmodus fahren kann, wobei das Fahrzeug (1) umfasst:
   das Fahrzeugbeleuchtungssystem (4a) gemäß einem der Ansprüche 1 bis 4.

**Revendications**

1. Un système d'éclairage pour véhicule (4a) conçu pour une utilisation dans un véhicule en mesure de rouler dans un mode de conduite automatique et dans un mode de conduite manuelle, et ce système d'éclairage pour véhicule (4a) se compose des éléments suivants :

   un groupe d'éclairage (42a) configuré pour former un profil de distribution de la lumière en émettant une lumière vers l'extérieur du véhicule et
   un groupe de commande d'éclairage (40a) configuré pour modifier la luminosité du profil de distribution de la lumière en fonction d'un mode de conduite du véhicule,
   **se caractérisant par le fait que** le groupe de commande d'éclairage (40a) est, en outre, configuré pour modifier une forme du profil de distribution de la lumière en fonction du mode de conduite du véhicule comme, par exemple, une largeur (V2) dans le sens horizontal du profil de distribution de la lumière (Pa) qui se projette sur un écran virtuel dont une surface est perpendiculaire au sens avant-arrière du véhicule dans le mode de conduite automatique est plus importante qu'une largeur (V1) dans le sens horizontal du profil de distribution de la lumière qui se projette sur l'écran virtuel dans le mode de conduite manuelle.

2. Le système d'éclairage pour véhicule (4a) que décrit la revendication 1,
si ce n'est que le groupe de commande de l'éclairage (40a) :

programme la luminosité du profil de distribution de la lumière en tant que première luminosité lorsque le mode de conduite du véhicule est le mode manuel de conduite et
programme la luminosité du profil de distribution de la lumière en tant que deuxième luminosité qui est inférieure à la première luminosité lorsque le mode de conduite du véhicule (1) est un mode sophistiqué d'assistance à la conduite ou un mode de conduite entièrement automatique.

3. Le système d'éclairage de véhicule (4a) que décrit la revendication 2, si ce n'est qu'il comporte, en outre :

une caméra (43a) configurée pour détecter le cadre environnant le véhicule
un radar laser (44a) configuré pour détecter le cadre environnant le véhicule
un coffret (24a) et
un couvercle (22a) rattaché au coffret,
et si ce n'est que le groupe d'éclairage (42a), la caméra (43a) et le radar laser (44a) sont implantés dans un espace (Sa) constitué du coffret (24a) et du couvercle (22a).

4. Le système d'éclairage de véhicule (4a) que décrit l'une ou l'autre des revendications 1 à 3,
si ce n'est que le mode de conduite du véhicule est le mode de conduite automatique, que le groupe de commande de l'éclairage (40a) est configuré pour commander le groupe d'éclairage (42a) de telle sorte que l'intensité de l'éclairage d'une zone d'illumination éclairée par le profil de distribution de la lumière devient uniforme.

5. Un véhicule (1) en mesure de rouler dans un mode de conduite automatique et un mode de conduite manuelle, et ce véhicule (1) est équipé :
du système d'éclairage de véhicule (4a) que décrit l'une ou l'autre des revendications 1 à 4.

FIG. 1

VEHICLE CONTROL UNIT

FRONT

LEFT — RIGHT

REAR

# FIG. 2

*FIG. 3*

```
                    ┌─────────────────────┐
                    │        START        │
                    └─────────────────────┘
                               │
                               ▼                              S10
              ┌────────────────────────────────────┐────────────┐
              <   IS DRIVING MODE OF VEHICLE CHANGED? >           │
              └────────────────────────────────────┘   NO        │
                               │                                  │
                              YES                                 │
                               │                          S11     │
                               ▼                                  │
              ┌────────────────────────────────────┐              │
              <      FULLY AUTOMATED DRIVING        >──────────┐   │
              <    MODE OR ADVANCED DRIVING         >          │   │
              <       ASSISTANCE MODE?              >   NO      │   │
              └────────────────────────────────────┘          │   │
                               │                               │   │
                              YES                              │   │
                               │          S12                  │   │
                               ▼                               │   │
              ┌────────────────────────────────┐               │   │
              │ SET LIGHT DISTRIBUTION PATTERN │               │   │
              │ EMITTED FROM LIGHTING UNIT AS  │               │   │
              │ LIGHT DISTRIBUTION PATTERN Pa  │               │   │
              │ FOR AUTOMATED DRIVING          │               ▼   │
              └────────────────────────────────┘          S13     │
                               │           ┌──────────────────────────────┐
                               │           │ SET LIGHT DISTRIBUTION PATTERN │
                               │           │ EMITTED FROM LIGHTING UNIT AS  │
                               │           │ LIGHT DISTRIBUTION PATTERN Pm  │
                               │           │ FOR MANUAL DRIVING             │
                               │           └──────────────────────────────┘
                               │                      │
                               ◄──────────────────────┘
                               │
                               ▼
                    ┌─────────────────────┐
                    │         END         │
                    └─────────────────────┘
```

*FIG. 4*

(a)

(b)

EP 3 663 134 B1

FIG. 5

# FIG. 6

Left Front Lighting System — 104a, with 140a CONTROL UNIT connected to:
- LIGHTING UNIT — 42a
- CAMERA — 43a
- LiDAR UNIT — 44a
- MILLIMETER WAVE RADAR — 45a

Right Front Lighting System — 104b, with 140b CONTROL UNIT connected to:
- LIGHTING UNIT — 42b
- CAMERA — 43b
- LiDAR UNIT — 44b
- MILLIMETER WAVE RADAR — 45b

2A

- SENSOR — 5
- HMI — 8
- GPS — 9
- WIRELESS COMMUNICATION UNIT — 10
- STORAGE DEVICE — 11

VEHICLE CONTROL UNIT — 3

- STEERING ACTUATOR — 12
- BRAKE ACTUATOR — 14
- ACCELERATOR ACTUATOR — 16

- STEERING DEVICE — 13
- BRAKE DEVICE — 15
- ACCELERATOR DEVICE — 17

Left Rear Lighting System — 104c, with 140c CONTROL UNIT connected to:
- LIGHTING UNIT — 42c
- CAMERA — 43c
- LiDAR UNIT — 44c
- MILLIMETER WAVE RADAR — 45c

Right Rear Lighting System — 104d, with 140d CONTROL UNIT connected to:
- LIGHTING UNIT — 42d
- CAMERA — 43d
- LiDAR UNIT — 44d
- MILLIMETER WAVE RADAR — 45d

## FIG. 7

104a

CONTROL UNIT

410a

LIGHTING CONTROL UNIT ←→ LIGHTING UNIT ~ 42a

420a

CAMERA CONTROL UNIT ←→ CAMERA ~ 43a

450a

SURROUNDING ENVIRONMENT INFORMATION INTEGRATION UNIT

430a

LiDAR CONTROL UNIT ←→ LIDAR UNIT ~ 44a

440a

MILLIMETER WAVE RADAR CONTROL UNIT ←→ MILLIMETER WAVE RADAR ~ 45a

*FIG. 8*

```
        START
          │
          ▼
┌──────────────────────┐  S20
│  ACQUIRE 3D MAPPING  │
│        DATA          │
└──────────────────────┘
          │
          ▼
┌──────────────────────┐  S21
│  DETECT OBJECT PRESENT│
│   AROUND VEHICLE     │
└──────────────────────┘
          │
          ▼
┌──────────────────────┐  S22
│ SPECIFY DISTANCE BETWEEN│
│  EACH OBJECT AND VEHICLE│
└──────────────────────┘
          │
          ▼
┌──────────────────────┐  S23
│   SPECIFY ATTRIBUTE  │
│    OF EACH OBJECT    │
└──────────────────────┘
          │
          ▼
┌──────────────────────┐  S24
│ DETERMINE BRIGHTNESS OF│
│   LIGHT ILLUMINATING │
│     EACH OBJECT      │
└──────────────────────┘
          │
          ▼
┌──────────────────────┐  S25
│ EMIT LIGHT DISTRIBUTION│
│PATTERN FROM LIGHTING UNIT│
└──────────────────────┘
          │
          ▼
         END
```

FIG. 9

FIG. 10

EP 3 663 134 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9277887 A
- DE 102015200859 A1
- WO 2017073632 A1
- EP 3290271 A1
- JP 2015076352 A
- US 2014247349 A1
- DE 102015001912 A1